# FASCICULE DE BREVET EUROPEEN

(11) **EP 3 134 247 B1**
(45) Date de publication et mention de la délivrance du brevet: **19.12.2018**
(21) Numéro de dépôt: 15725727.0
(22) Date de dépôt: 13.04.2015
(51) Int. Cl.: B29C 49/04, B29C 49/20, B29C 49/00, B29K 105/00, B29L 22/02, F15B 1/10, B60K 6/12, B60T 17/06, B29K 101/12, B29L 31/30, F15B 1/24, F15B 1/22

(54) **PROCÉDÉ DE FABRICATION D'UN ACCUMULATEUR DE PRESSION**
VERFAHREN ZUR HERSTELLUNG EINES DRUCKAKKUMULATORS
METHOD FOR MANUFACTURING A PRESSURE ACCUMULATOR

(30) Priorité: 23.04.2014 FR 1453636; 04.09.2014 FR 1458253
(43) Date de publication de la demande: 01.03.2017
(73) Titulaire: Plastic Omnium Advanced Innovation and Research, 1120 Bruxelles (BE)
(72) Inventeur: BOUCAUX, Eric, F-60157 Elincourt Sainte Marguerite (FR); HILL, David, Commerce Township 48382 (US); LEMASSON, Wilfried, F-60490 Marest sur Matz (FR); LACOME, Pierre, F-60190 Lachelle (FR)
(74) Mandataire: Potdevin, Emmanuel Eric
(86) Numéro de dépôt international: PCT/FR2015/050979
(87) Numéro de publication internationale: WO 2015/162355

(56) Documents cités:
- GB-A- 2 419 381
- US-A- 4 587 074
- US-A1- 2010 255 234

## Description

L'invention concerne les accumulateurs de pression pour véhicule.
Des accumulateurs de pression de l'art antérieur sont décrits dans les documents GB2419381A et US4587074A. Un réservoir pressurisé de l'art antérieur est décrit dans le document US2010/255234A1.

Certains types de véhicules hybrides comportent un système de pompe/moteur hydraulique pouvant charger des accumulateurs hydrauliques en huile pour stocker cette énergie sous la forme de réserve de pression. Une machine hydraulique reliée à des roues motrices du véhicule peut fonctionner en moteur pour délivrer une puissance mécanique aux roues en prélevant de l'énergie stockée dans les accumulateurs hydrauliques, ou en pompe pour recharger ces accumulateurs lors des freinages du véhicule, afin de récupérer au moins en partie l'énergie cinétique du véhicule.

Un accumulateur de type piston comprend une enceinte à l'intérieur de laquelle est disposée une chambre à piston. Un équipage mobile à piston est monté coulissant dans la chambre. Généralement, la chambre est reliée à un circuit de gaz qui envoie du gaz dans la chambre et la ferme pour maintenir constante la quantité de gaz présente. L'équipage mobile se déplace dans un sens de coulissement lorsque l'huile est envoyée afin de comprimer le gaz (par exemple, de l'azote), et se déplace dans l'autre sens de coulissement (i.e. sens opposé) pour renvoyer l'huile à l'extérieur de l'accumulateur.

Un autre type d'accumulateur hydraulique est un accumulateur à vessie qui comprend une enceinte à l'intérieur de laquelle est disposée une vessie apte à contenir du gaz, de préférence de l'azote. Lors de la récupération d'énergie, on envoie de l'huile dans l'enceinte autour de la vessie. Ainsi, la vessie pleine de gaz est comprimée par l'huile. Lorsqu'on souhaite prélever l'énergie stockée dans l'enceinte de l'accumulateur, on diminue la pression exercée par l'huile sur la vessie. Si cette pression est plus faible que celle exercée par la vessie, l'huile est évacuée de l'enceinte. Cet accumulateur de pression comprend également un enroulement filamentaire autour de son enceinte.

Le montage de la chambre dans l'enceinte de l'accumulateur est difficile car il a lieu dans une enceinte déjà réalisée, avec la nécessite d'agencer et de visser de nombreux éléments. Ce montage est manuel, donc très complexe, chronophage, et même dangereux car il comporte des risques de coupure de doigts et de complications musculaires pour l'opérateur.

Un but de l'invention est donc de faciliter la fabrication d'un accumulateur de pression.

Ainsi, c'est au stade de la paraison que l'enceinte est fixée à la chambre. Cela réduit les risques de blessure. En particulier, il n'est plus nécessaire d'accéder à l'intérieur de l'enceinte une fois celle-ci formée pour y fixer la chambre.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les argiles, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé est le polyéthylène. D'excellents résultats peuvent être obtenus avec du polyéthylène haute densité (PEHD).

La paroi de l'enceinte peut être constituée d'une seule couche de matière thermoplastique ou de deux couches. Une ou plusieurs autres couches supplémentaires possibles peuvent, de manière avantageuse, être constituées de couches en matériau barrière aux liquides et/ou aux gaz. De préférence, la nature et l'épaisseur de la couche barrière sont choisies de manière à limiter au maximum la perméabilité des liquides et des gaz en contact avec la surface intérieure du l'enceinte. Avantageusement, cette couche peut être à base d'une résine barrière, c'est-à-dire d'une résine imperméable au carburant telle que l'EVOH par exemple (copolymère éthylène - acétate de vinyle partiellement hydrolysé).

Dans un mode de réalisation, la chambre comporte une vessie.

Dans une autre mode de réalisation, la chambre comporte au moins un équipage à piston.

Ainsi, le procédé est apte à être mis en oeuvre pour les deux principaux types d'accumulateurs présentés précédemment.

Avantageusement, on fixe la chambre à une tête d'extrusion de la paraison.

C'est donc la tête d'extrusion qui assure le support de la chambre durant le formage de l'enceinte.

Cette fixation peut avoir lieu au moyen d'un robot.

Cela évite une intervention manuelle dans l'installation de formage et réduit les risques d'accident pour les opérateurs.

De préférence, on extrude la paraison autour de la chambre.

Avantageusement, on chauffe la ou chaque partie de la chambre avant l'application de la paraison sur cette partie.

Ainsi, l'opération de surmoulage de l'enceinte sur la partie de la chambre est facilitée.

De préférence, l'application est réalisée par pression.

Ainsi, elle est encore plus efficace et le maintien de la chambre à son extrémité est assuré.

Avantageusement, l'application est réalisée au moyen de la fermeture d'un moule de formage de l'enceinte à partir de la paraison.

Ainsi, la fixation de la chambre à l'enceinte a lieu durant le soufflage de la paraison, ce qui permet d'augmenter la rapidité de la fabrication de l'ensemble et le procédé ne nécessite pas un grand nombre d'outils.

On peut prévoir que la partie de la chambre ou au moins l'une des parties de la chambre forme une extrémité supérieure de la chambre, notamment une valve

On peut aussi prévoir que la partie de la chambre ou au moins l'une des parties de la chambre forme une extrémité inférieure de la chambre, notamment une soupape.

Avantageusement, la partie de la chambre ou au moins l'une des parties de la chambre constitue un ensemble composé d'éléments qui ne peuvent être séparés que par destruction de l'un au moins des éléments. On peut également dire qu'il est monobloc.

Ainsi, la partie monobloc peut être fixée durant le soufflage de la paraison, au lieu d'être montée en plusieurs pièces. On l'appelle également « insert ». C'est contre cette partie que la paraison est appliquée lors de la fermeture du moule.

De préférence, la partie de la chambre ou au moins l'une des parties de la chambre présente une face externe formée par un matériau thermoplastique et on réalise l'application en appliquant la paraison sur cette face.

Ainsi, la compatibilité des matériaux permet le soudage de la partie de la chambre à l'enceinte.

De préférence, on réalise l'application sur deux parties de la chambre distantes l'une de l'autre, telles que des extrémités de la chambre.

On prévoit également selon l'invention un accumulateur de pression pour véhicule, qui comprend :
- une enceinte en matière thermoplastique, et
- une chambre logée dans l'enceinte, l'enceinte étant au moins en partie surmoulée sur au moins une partie de la chambre.

Avantageusement, la chambre comprend une vessie.

On sait qu'il existe des accumulateurs à piston de type I, III, et IV. Les accumulateurs de type I sont en métal, tandis que les types III et IV ont une structure externe en composite. Les accumulateurs de type III résistent mal à la fatigue. Des accumulateurs de type IV à piston existent. Ils sont prévus pour un montage vertical (par rapport au sol). Ces accumulateurs ne sont pas adaptés pour un montage sur un véhicule automobile. En effet, pour un tel cas, il est souhaitable que le ou les accumulateurs soient montés à plat (c'est-à-dire à l'horizontal par rapport au sol) sous la caisse du véhicule. On a également proposé des accumulateurs de type piston pour véhicule automobile. Ces accumulateurs (dits de type I) connus utilisent des pièces d'assemblage en acier, ce qui les rend particulièrement lourds, encombrants et coûteux.

Il est donc souhaitable de fournir un accumulateur de type IV à piston qui offre une résistance convenable, et en même temps, garde un poids particulièrement réduit. Il est aussi souhaitable de fournir un tel accumulateur qui soit compact et avec une faible perméabilité.

C'est pourquoi, dans un mode de réalisation, la chambre comprend un équipage à piston, le surmoulage de l'enceinte a lieu sur des parties de la chambre formant au moins une partie d'un premier embout pour l'arrivée et l'évacuation d'un gaz sous pression et au moins une partie d'un deuxième embout pour l'arrivée et l'évacuation d'un liquide sous pression.

On peut prévoir en particulier d'équiper la chambre à piston avec des embouts faisant saillie vers l'extérieur de la chambre et de surmouler une partie de l'enceinte sur ces embouts.

De plus, en surmoulant une partie de l'enceinte sur ces embouts, la chambre à piston est solidaire de l'enceinte et le poids de l'accumulateur est diminué du fait qu'aucune pièce d'assemblage en acier de l'enceinte à la chambre n'est utilisée. De plus, un gaz sous pression (par exemple, de l'azote ou de l'hélium) peut entrer et sortir de la chambre via le premier embout, et un liquide sous pression (par exemple de l'huile), peut entrer et sortir de la chambre via le deuxième embout.

Dans un autre mode de réalisation, la chambre comprend un équipage à piston, le surmoulage de l'enceinte a lieu sur au moins une partie d'un premier embout périphérique pour l'arrivée et l'évacuation d'un gaz sous pression, la chambre comprend un deuxième embout central pour l'arrivée et l'évacuation d'un liquide sous pression et les premier et deuxième embouts sont placés du même côté de l'accumulateur.

Avantageusement, les premier et deuxième embouts sont concentriques.

Dans un mode de réalisation particulier, les premier et deuxième embouts peuvent être fixés de manière solidaire sur la chambre à piston, par exemple par soudure ou tout autre moyen répondant à la fonction.

Dans un mode de réalisation particulier, la chambre à piston peut être elle-même réalisée en matériau composite et assemblée sur des embouts de matériau différent.

Dans un mode de réalisation particulier, le système à piston peut être formé par l'assemblage de deux demi coquilles, et entre lesquelles on a au préalable placé un équipage mobile à piston. Par exemple, chaque demi-coquille comprend une moitié de chambre à piston et des premier et deuxième embouts. Par exemple, chaque demi-coquille peut être obtenue par moulage d'un matériau métallique ou d'un matériau composite.

Dans un mode de réalisation particulier, les premier et deuxième embouts sont diamétralement opposés (i.e. en vis-à-vis). Une telle configuration permet, après surmoulage de l'enceinte sur ces embouts, d'avoir une bonne tenue mécanique de l'ensemble (i.e. faible vibration).

Dans un autre mode de réalisation particulier, les premier et deuxième embouts sont désaxés l'un par rapport à l'autre.

Les premier et deuxième embouts peuvent avoir une forme quelconque. Préférentiellement, ils sont de forme tubulaire. Ils peuvent être de diamètre identique ou différent.

Dans un autre mode de réalisation particulier, la chambre à piston peut comprendre plus de deux embouts. Par exemple, la chambre à piston peut comprendre un troisième embout relié à un autre circuit de gaz sous pression, servant de circuit de secours.

Dans un mode de réalisation avantageux, la surface extérieure de l'enceinte est recouverte par un revêtement (i.e. couche extérieure) en matériau composite.

Préférentiellement, ce revêtement est à base de fibres de module élastique élevé et de préférence, de fibres de verre ou de carbone.

L'équipage mobile à piston est préférentiellement étanche.

Selon un mode de réalisation particulièrement avantageux, l'accumulateur comprend un capteur configuré pour détecter la positon de l'équipage mobile à piston à l'intérieur de la chambre à piston. Le capteur peut être du type avec ou sans contact.

Dans un mode de réalisation particulier, l'accumulateur peut comprendre un capteur infrarouge ou un capteur ultrasonique monté dans la chambre à piston, pour mesurer par exemple, mais de manière non exhaustive, la position exacte du piston (i.e. équipage mobile).

Dans un autre mode de réalisation particulier, la chambre à piston est munie d'une série d'interrupteurs (ou les intègre dans son enceinte), ou d'une cellule à résistance variable, et l'équipage mobile à piston peut être muni d'un aimant configuré pour commander la fermeture des interrupteurs. Ainsi, l'ensemble chambre/équipage mobile à piston peut agir comme un potentiomètre. En effet, chaque position de l'équipage mobile à piston dans la chambre à piston peut correspondre à une valeur de résistance différente.

On prévoit enfin selon l'invention une installation de fabrication d'un accumulateur de pression pour véhicule, qui comprend :
- un moule,
- des moyens pour porter une chambre de sorte qu'elle s'étende dans le moule, et
- des moyens pour former une enceinte autour de la chambre par soufflage d'une paraison dans le moule et pour appliquer au moins une partie de la paraison sur au moins une partie de la chambre.

Nous allons maintenant décrire des modes de réalisation de l'invention à titre d'exemples non limitatifs et à l'appui des dessins annexés sur lesquels :
- les figures 1 à 3 illustrent de façon schématique et en coupe axiale un procédé de fabrication d'un accumulateur de pression selon un premier mode de réalisation de l'invention ;
- la figure 4 illustre une vue en coupe axiale du système d'accrochage de la tête d'extrusion à la vessie ;
- la figure 5 est une vue en coupe axiale d'une extrémité inférieure d'une chambre fixée à une enceinte de cet accumulateur ; et
- les figures 6 et 7 sont des vues en coupe axiale de deux autres modes de réalisation d'un accumulateur selon l'invention.

### Premier mode de réalisation

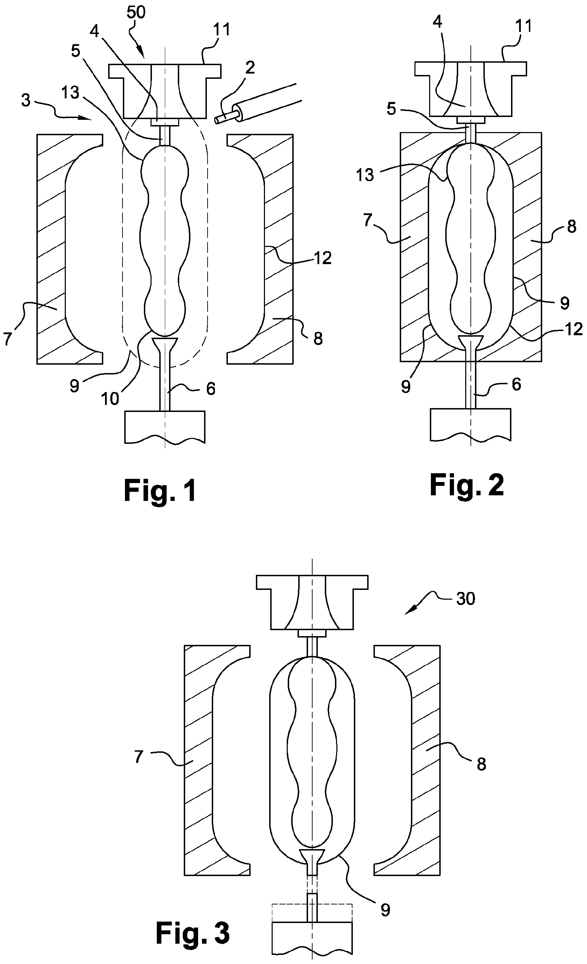

On va tout d'abord décrire une installation et un procédé pour la réalisation d'un accumulateur selon un premier mode de réalisation de l'invention en référence aux figures 1 à 3.

L'installation de fabrication 50 comprend une tête d'extrusion 11 permettant d'extruder une paraison en matière thermoplastique 9. L'installation comprend un moule de formage d'une enceinte à partir de la paraison, comprenant par exemple deux parties de moule 7 et 8 montées mobiles l'une par rapport à l'autre, ici en direction horizontale, et par rapport à la tête 11. La tête comprend des moyens de support d'une vessie 3 de sorte que la vessie s'étend entre les parties de moule, que celui-ci soit ouvert ou fermé. L'installation comprend aussi une canne de soufflage inférieure 6 s'étendant à la verticale de la tête 11 et permettant d'injecter du gaz dans la paraison lors du soufflage de cette dernière pour former l'enceinte. L'installation comprend aussi un robot comportant un bras 2 apte à venir fixer une vessie à la tête d'extrusion et à la canne de soufflage par les extrémités supérieure et inférieure de la vessie.

Le procédé se déroule de la façon suivante.

On réalise dans une station externe un chauffage des parties de la vessie 3 sur lesquelles sera appliquée une paraison. Dans cet exemple, la vessie 3 comprend une extrémité 5 et l'extrémité opposée 10 en matière thermoplastique. Ainsi, en chauffant ces extrémités 5 et 10, ces dernières sont amenées dans un état partiellement fondu. Dans un mode de réalisation particulier, cette chauffe peut être du type infra-rouge. Alternativement, cette chauffe peut être du type laser, ou par courant d'air chaud, voire un chauffage par miroir. Cette chauffe sur station externe permet avantageusement de gagner en temps de cycle. En effet, le chauffage se fait indépendamment des opérations de soufflage dans le moule.

Dans un autre mode de réalisation, la chauffe de tout ou partie de la vessie peut être réalisée au niveau du moule. Par exemple, la tête d'extrusion peut être équipée par des moyens de chauffe, par exemple des moyens de soufflage d'air chaud. Ce mode de réalisation présente l'avantage d'avoir une installation compacte.

Ensuite, dans une étape au sein de l'installation 50, le bras de robot 2 fixe l'extrémité supérieure rigide monobloc 5 de la vessie 3 à une partie inférieure de la tête d'extrusion 4. Cette vessie 3 est également fixée par le bras à la cane de soufflage 6, à l'extrémité opposée 10. La vessie, en dehors de ses extrémités rigides monoblocs 5 et 10, comporte un sac flexible déformable 13 formant une chambre étanche pour un gaz. Les deux parties du moule se trouvent de part et d'autre de la vessie, de la tête et de la canne.

Dans une variante non illustrée, l'extrémité 10 de la vessie 3 n'est pas fixée à la cane de soufflage.

Dans une étape suivante, visible à la figure 1, une paraison 9 en matière thermoplastique, illustrée en pointillés, est extrudée et descend verticalement de la tête d'extrusion 11 de façon à entourer la vessie. Ainsi, la vessie est contenue dans la paraison 9.

Une fois que l'extrusion est terminée, on réalise un drapage pour maintenir la paraison en position dans le moule et un pré-soufflage pour tendre la paraison et éviter le contact de la paraison contre la vessie durant la fermeture du moule qui va suivre. Puis, dans une étape ultérieure illustrée à la figure 2, on ferme le moule : les deux parties 7 et 8 du moule se dirigent l'une vers l'autre. Les extrémités haute et basse de ces deux parties compriment la paraison sur les deux extrémités respectives préchauffées de la vessie : au niveau de l'extrémité 5 tenue par la tête d'extrusion et au niveau de l'extrémité 10 maintenue sur la canne de soufflage 6.

Dans une étape suivante non illustrée, la canne de soufflage injecte de l'air dans la paraison, autour de la vessie. Ainsi, les parois de la paraison sont comprimées contre les parois 12 du moule. La paraison prend ainsi la forme du moule pour devenir l'enceinte de l'accumulateur, et contient la vessie à laquelle elle est fixée rigidement au niveau de ses extrémités 5 et 10.

Lors de l'étape suivante visible à la figure 3, les deux parties du moule 7 et 8 se retirent en directions opposées, et on peut disposer de l'ensemble comprenant l'enceinte réalisée et la vessie fixée aux deux extrémités supérieure et inférieure de l'enceinte. On obtient ainsi les éléments de base d'un accumulateur de pression 30.

L'extrémité supérieure 5 de la vessie forme par exemple une valve pour connecter la vessie à des conduits du véhicule afin d'amener du gaz dans la vessie, tandis que l'extrémité 6 peut former une soupape et maintenir en place la vessie dans l'enceinte 9 de l'accumulateur de pression.

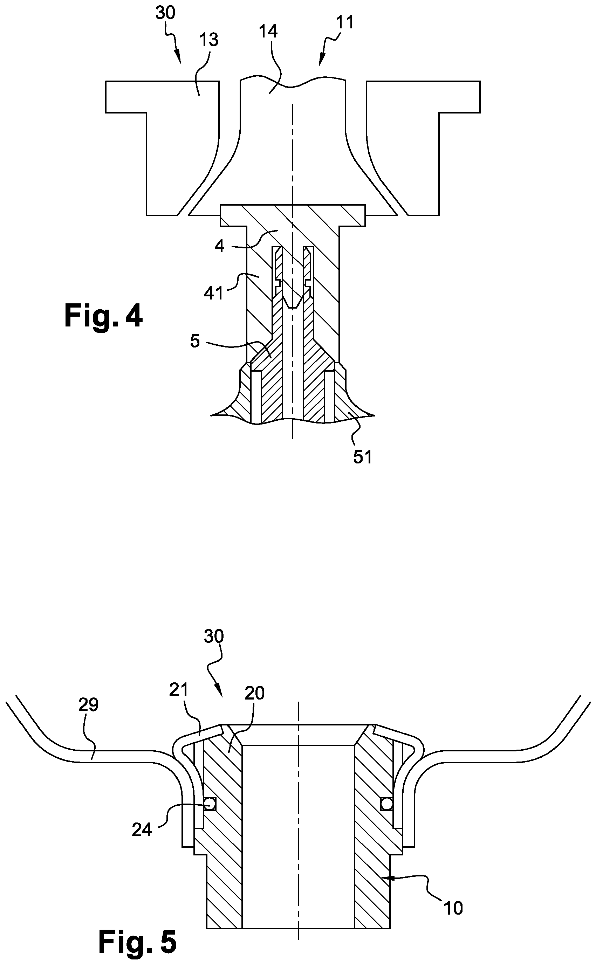

La figure 4 illustre le système d'accrochage de l'extrémité supérieure 5 de la chambre à la tête d'extrusion 11. La tête d'extrusion 11 comprend un corps de tête 13 monté fixe par rapport à un bâti de l'installation et une partie mobile telle qu'un poinçon 14. Le poinçon est monté coulissant par rapport au corps suivant la direction verticale. En position haute, il est en contact avec le corps tout autour du poinçon 14 sans ménager d'espace entre le poinçon et le corps 13 de sorte que toute extrusion de matière est empêchée, la tête étant fermée. En position basse, il ménage entre le poinçon et le corps un espace symétrique de révolution autour de l'axe vertical pour permettre l'extrusion de la matière thermoplastique et la descente d'une paraison 9, la tête étant alors ouverte. L'installation comprend un support 41 fixé rigidement à la face inférieure du poinçon 14, qui présente un logement de réception de la partie supérieure 5 de la vessie, ouvert vers le bas, afin de porter cette dernière de façon amovible. La liaison amovible de la vessie au support peut avoir lieu par différents moyens classiques tels qu'un aimant de maintien et/ou une bille de pression. Le surmoulage de l'enceinte 9 a lieu sur une partie inférieure 51 de l'extrémité de la chambre qui dépasse du bas du support.

L'accrochage de l'extrémité inférieure de la chambre 3 sur la canne de soufflage 6 a lieu par des moyens classiques non représentés.

La figure 5 illustre un détail du premier mode de réalisation au niveau de l'extrémité inférieure 10 de la vessie formant un insert. L'insert 10 est monobloc, c'est - à-dire qu'il ne peut être séparé en plusieurs éléments que par destruction d'au moins l'un de ces éléments. On distingue l'enceinte 29 de l'accumulateur et la couche thermoplastique 21 de cet insert sur laquelle l'enceinte est surmoulée, cette couche étant appliquée sur la pièce métallique 20. Alternativement, on peut ne pas appliquer la couche 21 sur la pièce 20, se dispenser de la couche 21 et effectuer le surmoulage de l'enceinte 29 directement sur la pièce métallique 20 dans des rainures, des orifices ou d'autres types de reliefs et de cavités prévus à cette fin à la surface de la pièce 20 pour favoriser ce surmoulage. L'insert comporte également un joint 24 qui permet de réaliser l'étanchéité entre la pièce 20 et l'enceinte 29 ou la pièce 20 et la couche 21. Ce joint peut être fabriqué en caoutchouc.

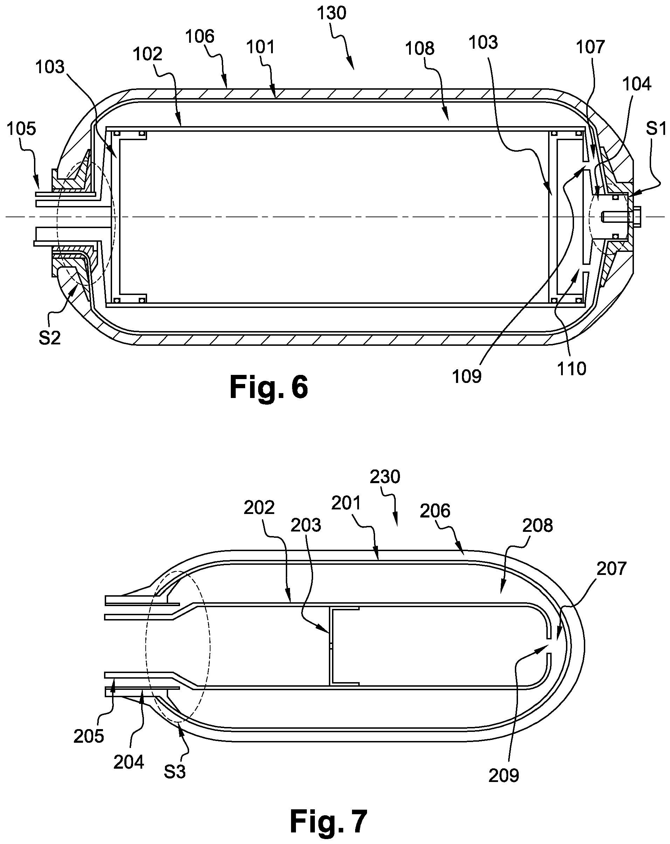

Nous allons maintenant décrire deux autres modes de réalisation d'accumulateurs de pression en référence aux figures 6 et 7 et réalisés au moyen du procédé selon l'invention. Contrairement à l'accumulateur du premier mode, celui-ci est un accumulateur à piston.

### Deuxième mode de réalisation

La figure 6 illustre schématiquement un accumulateur de pression selon le deuxième mode de réalisation de l'invention.

L'accumulateur de pression 130 comprend une enceinte 101 à l'intérieur de laquelle est placée une chambre à piston 102 qui comprend un équipage à piston 103 monté coulissant dans la chambre 102, et placé dans une première position sur la figure La référence 103' illustre le même équipage à piston dans une deuxième position.. La chambre 102 est munie d'un premier embout 104 pour l'arrivée et l'évacuation d'un gaz sous pression et d'un deuxième embout 105 pour l'arrivée et l'évacuation d'un liquide sous pression. Ces deux embouts s'étendent à des extrémités axiales de l'accumulateur opposées l'une à l'autre. L'accumulateur comprend une enceinte 101 recouverte par une couche de renfort extérieure 106. Dans un mode de réalisation particulier, cette couche 106 peut être un enroulement de fibres de carbone. L'enceinte 101 est en matière thermoplastique.

Comme illustré sur l'exemple de la figure 5, l'enceinte 101 est surmoulée sur le premier embout 104 et sur le deuxième embout 105. La zone de surmoulage du premier embout 104 est référencée S1 et celle du deuxième embout 105 S2. Ces opérations dites de « surmoulage » ont été réalisées au moyen du procédé de l'invention tel qu'il est mise en oeuvre dans le premier mode décrit plus haut. Ainsi, la chambre à piston 102 a été fixée au niveau de l'embout 104 au bas de la tête d'extrusion. De même, l'embout 105 de la chambre a été fixé à la canne de soufflage. Les étapes du procédé permettent ici aussi de réaliser l'accumulateur de manière plus rapide, facile et avec moins de risque que dans l'état de la technique.

Des espaces 107, 108 sont formés entre l'enceinte 101 et la chambre à piston 102. L'espace 107 s'étend en direction axiale entre ces deux éléments alors que l'espace 108 s'étend entre eux en direction radiale circonférentielle. Avantageusement, les dimensions de l'enceinte 101 et de la chambre à piston 102 peuvent être choisies de manière à contenir une quantité de gaz souhaitée dans ces espaces 107, 108. La chambre à piston 102 comprend des orifices 109, 110 configurés pour permettre une circulation du gaz sous pression entre la chambre 102 et les espaces 107, 108.

### Troisième mode de réalisation

Dans un troisième mode de réalisation d'un accumulateur réalisé au moyen du procédé selon l'invention et illustré à la figure 7, l'accumulateur est identique à celui du deuxième mode sauf pour les caractéristiques suivantes. Les éléments analogues portent des références numériques augmentées de 100, le cas échéant.

Le premier embout 204 pour l'arrivée et l'évacuation d'un gaz sous pression, tel de l'azote, est périphérique, et le deuxième embout 205 pour l'arrivée et l'évacuation d'un liquide sous pression est central, les premier et deuxième embouts étant placés cette fois du même côté de l'accumulateur. De plus, en l'espèce, ils sont concentriques.

Comme illustré sur l'exemple de la figure 7, l'enceinte 201 est surmoulée sur le premier embout périphérique 204. La zone de surmoulage du premier embout périphérique 204 est référencée S3. Comme dans le précédent mode, la chambre à piston 202 comprend un orifice 209 configuré pour permettre une circulation du gaz sous pression entre la chambre 202 et les espaces 207, 208 II peut être possible dans certaines configurations de supprimer ce deuxième maintien de la chambre à piston.

## Revendications

1. Procédé de fabrication d'un accumulateur (30 ; 130 ; 230) de pression pour véhicule, **caractérisé en ce que**, à partir d'une paraison en matière thermoplastique (9), on forme une enceinte (29 ; 101 ; 201) autour d'une chambre (3 ; 102 ; 202) en appliquant au moins une partie, au moins partiellement fondue, de la paraison sur au moins une partie (5 ; 20) de la chambre de façon à fixer la paraison (9) à la chambre (3 ; 102 ; 202).

2. Procédé selon la revendication précédente, dans lequel la chambre comporte une vessie (13).

3. Procédé selon la revendication 1, dans lequel la chambre comporte au moins un équipage à piston (102 ; 202).

4. Procédé selon l'une quelconque des revendications précédentes, dans lequel on fixe la chambre à une tête d'extrusion (4) de la paraison (9), notamment au moyen d'un robot (2).

5. Procédé selon l'une quelconque des revendications précédentes, dans lequel on chauffe la ou chaque partie de la chambre (3 ; 102 ; 202) avant l'application de la paraison sur cette partie.

6. Procédé selon l'une quelconque des revendications précédentes, dans lequel l'application est réalisée par pression.

7. Procédé selon l'une quelconque des revendications précédente, dans lequel l'application est réalisée au moyen de la fermeture d'un moule (7, 8) de formage de l'enceinte (29 ; 101 ; 201) à partir de la paraison (9).

8. Procédé selon l'une quelconque des revendications précédentes, dans lequel la partie de la chambre ou au moins l'une des parties de la chambre forme une extrémité inférieure ou supérieure (5 ; 104; 204) de la chambre, notamment une valve ou une soupape, et de préférence on réalise l'application sur ces deux extrémités.

9. Procédé selon l'une quelconque des revendications précédentes, dans lequel la partie de la chambre (3 ; 102 ; 202) ou au moins l'une des parties de la chambre constitue un ensemble (5) composé d'éléments qui ne peuvent être séparés que par destruction de l'un au moins des éléments.

10. Procédé selon l'une quelconque des revendications précédentes, dans lequel la partie de la chambre (3 ; 102 ; 202) ou au moins l'une des parties de la chambre présente une face externe formée par un matériau thermoplastique (21) et on réalise l'application en appliquant la paraison (9) sur cette face.

11. Accumulateur de pression (130 ; 230) pour véhicule, **caractérisé en ce qu'**il comprend :
- une enceinte (101 ; 201) en matière thermoplastique, et
- une chambre (3 ; 102 ; 202) logée dans l'enceinte, l'enceinte étant au moins en partie surmoulée sur au moins une partie de la chambre.

12. Accumulateur selon la revendication précédente, dans lequel la chambre comprend une vessie (3).

13. Accumulateur (100) pour véhicule selon la revendication 11, dans lequel :
- la chambre comprend un équipage à piston (102) ; et
- le surmoulage de l'enceinte a lieu sur des parties de la chambre formant au moins une partie (S1) d'un premier embout (104) pour l'arrivée et l'évacuation d'un gaz sous pression et au moins une partie (S2) d'un deuxième embout (105) pour l'arrivée et l'évacuation d'un liquide sous pression.

14. Accumulateur (200) selon la revendication 11, dans lequel :
- la chambre comprend un équipage à piston (202) ;
- le surmoulage de l'enceinte a lieu sur au moins une partie d'un premier embout périphérique (204) pour l'arrivée et l'évacuation d'un gaz sous pression;
- la chambre comprend un deuxième embout central (205) pour l'arrivée et l'évacuation d'un liquide sous pression ; et
- les premier et deuxième embouts sont placés du même côté de l'accumulateur, et par exemple sont concentriques.

## Patentansprüche

1. Verfahren zur Herstellung eines Druckspeichers (30; 130; 230) für ein Fahrzeug, **dadurch gekennzeichnet, dass** ausgehend von einem thermoplastischen Vorformling (9) ein Gehäuse (29 ; 101 ; 201) um eine Kammer (3 ; 102 ; 202) herum mittels Aufbringens mindestens eines mindestens teilweise geschmolzenen Teils des Vorformlings auf mindestens einen Teil (5 ; 20) der Kammer zum Befestigen des Vorformlings (9) an der Kammer (3 ; 102 ; 202) gebildet wird.

2. Verfahren nach dem vorhergehenden Anspruch, bei dem die Kammer eine Blase (13) umfasst.

3. Verfahren nach Anspruch 1, wobei die Kammer mindestens eine Kolbenmannschaft (102 ; 202) aufweist.

4. Verfahren nach einem der vorhergehenden Ansprüche, bei dem die Kammer an einem Extrusionskopf (4) des Vorformlings (9), insbesondere mittels eines Roboters (2), befestigt wird.

5. Verfahren nach einem der vorhergehenden Ansprüche, bei dem die oder jeder Teil der Kammer (3 ; 102 ; 202) erwärmt wird, bevor der Vorformling auf dieses Teil aufgebracht wird.

6. Verfahren nach einem der vorhergehenden Ansprüche, bei dem die Anwendung durch Druck erfolgt.

7. Verfahren nach einem der vorhergehenden Ansprüche, bei dem die Anwendung durch Schließen einer Form (7, 8) zum Formen von die Anlage (29 ; 101 ; 201) aus dem Tropfen (9).

8. Verfahren nach einem der vorhergehenden Ansprüche, bei dem der Teil der Kammer oder mindestens einer der Teile der Kammer ein niedriges oder höheres Ende (5 ; 104 ; 204) der Kammer bildet, insbesondere ein Ventil oder ein Absperrventil, und vorzugsweise wird die Anwendung an diesen beiden Enden durchgeführt.

9. Verfahren nach einem der vorhergehenden Ansprüche, bei dem der Teil der Kammer (3 ; 102 ; 202) oder mindestens einer der Teile der Kammer ein Ganzes (5) bildet, das aus Elementen besteht, die nur durch Zerstörung mindestens eines der Elemente getrennt werden können.

10. Verfahren nach einem der vorhergehenden Ansprüche, wobei das Kammerteil (3 ; 102 ; 202) oder mindestens eines der Kammerteile eine aus einem thermoplastischen Material (21) gebildete Außenfläche aufweist und das Aufbringen durch Aufbringen des Vorformlings (9) auf diese Fläche erfolgt.

11. Druckspeicher (130 ; 230) für ein Fahrzeug, **dadurch gekennzeichnet, dass** er Folgendes umfasst:
- ein Kunststoffgehäuse (101 ; 201) und
- eine Kammer (3; 102; 202), die in dem Gehäuse untergebracht ist, wobei das Gehäuse zumindest teilweise über zumindest einen Teil der Kammer gebildet ist.

12. Speicher nach dem vorhergehenden Anspruch, in dem die Kammer eine Blase (3) umfasst.

13. Speicher (100) für ein Fahrzeug nach Anspruch 11, wobei :
- die Kammer eine Kolbengruppe (102) aufweist; und
- das Umspritzen des Gehäuses an Teilen der Kammer erfolgt, die mindestens einen Teil (S1) eines ersten Endstücks (104) für den Ein- und Auslass eines Gases unter Druck und mindestens einen Teil (S2) eines zweiten Endstücks (105) für den Ein- und Auslass einer unter Druck stehenden Flüssigkeit bilden.

14. Speicher (200) nach Anspruch 11, wobei :
- die Kammer eine Kolbenmannschaft (202) umfasst;
- das Umspritzen des Gehäuses auf mindestens einem Teil eines ersten peripheren Endstücks (204) für den Ein- und Auslass eines Gases unter Druck stattfindet;
- die Kammer ein zweites zentrales Endstück (205) für den Ein- und Auslass einer unter Druck stehenden Flüssigkeit umfasst; und
- das erste und zweite Endstück sich auf der gleichen Seite des Speichers befinden und beispielsweise konzentrisch sind.

## Claims

1. Method of fabrication of a pressure accumulator (30; 130; 230) for a vehicle, **characterized in that** an enclosure (29; 101; 201) around a chamber (3; 102; 202) is formed from a parison of thermoplastic material (9) by applying at least one portion, at least partly molten, of the parison to at least one portion (5; 20) of the chamber so as to attach the parison (9) to the chamber (3; 102; 202).

2. Method according to the preceding claim, wherein the chamber comprises a bladder (13).

3. Method according to claim 1, wherein the chamber comprises at least one piston assembly (102; 202).

4. Method according to any one of the preceding claims, wherein the chamber is attached to an extrusion head (4) of the parison (9), especially by means of a robot (2).

5. Method according to any one of the preceding claims, wherein the portion or each portion of the chamber (3; 102; 202) is heated prior to the application of the parison to that portion.

6. Method according to any one of the preceding claims, wherein the application is done by pressure.

7. Method according to any one of the preceding claims, wherein the application is done by means of the closing of a mold (7, 8) for the molding of the enclosure (29; 101; 201) from the parison (9).

8. Method according to any one of the preceding claims, wherein the portion of the chamber or at least one of the portions of the chamber forms a lower or upper end (5 ; 104; 204) of the chamber, especially a valve, and the application is preferably performed at these two ends.

9. Method according to any one of the preceding claims, wherein the portion of the chamber (3; 102; 202) or at least one of the portions of the chamber constitutes an assembly (5) composed of elements which can only be separated by destruction of at least one of the elements.

10. Method according to any one of the preceding claims, wherein the portion of the chamber (3; 102; 202) or at least one of the portions of the chamber has an external face formed by a thermoplastic material (21) and the application is performed by applying the parison (9) to this face.

11. Pressure accumulator (130; 230) for a vehicle, **characterized in that** it comprises:
- an enclosure (101; 201) of thermoplastic material, and
- a chamber (3; 102; 202) housed in the enclosure, the enclosure being at least partly overmolded on at least one portion of the chamber.

12. Accumulator according to the preceding claim, wherein the chamber comprises a bladder (3).

13. Accumulator (100) for a vehicle according to Claim 11, wherein:
- the chamber comprises a piston assembly (102); and
- the overmolding of the enclosure takes place on portions of the chamber forming at least one portion (S1) of a first nozzle (104) for the inlet and outlet of a pressurized gas and at least one portion (S2) of a second nozzle (105) for the inlet and outlet of a pressurized liquid.

14. The accumulator (200) according to Claim 11, wherein:
- the chamber comprises a piston assembly (202);
- the overmolding of the enclosure takes place on at least one portion of a first peripheral nozzle (204) for the inlet and outlet of a pressurized gas;
- the chamber comprises a second central nozzle (205) for the inlet and outlet of a pressurized liquid; and
- the first and second nozzles are placed on the same side of the accumulator, and for example they are concentric.
